# EUROPÄISCHE PATENTSCHRIFT

(11) **EP 0 536 488 B1**
(45) Veröffentlichungstag und Bekanntmachung des Hinweises auf die Patenterteilung: **13.12.1995**
(21) Anmeldenummer: 92112625.6
(22) Anmeldetag: 23.07.1992
(51) Int. Cl.: H02H 7/08

(54) **Überlastschutz für die Leistungssteuerstufe eines Gleichstrommotors**
Overload protection for the power amplifier of a DC-motor
Protection de surcharge pour un commutateur de puissance d'un moteur à courant continu

(30) Priorität: 08.10.1991 DE 4133302
(43) Veröffentlichungstag der Anmeldung: 14.04.1993
(73) Patentinhaber: Jungheinrich Aktiengesellschaft, 22047 Hamburg (DE)
(72) Erfinder: Oestmann, Harald, Dipl.-Ing., W-2000 Hamburg 65 (DE); Schulz, Gerhard, W-2096 Toppenstedt (DE)
(74) Vertreter: Patentanwälte Hauck, Graalfs, Wehnert, Döring, Siemons

(56) Entgegenhaltungen:
- EP-A- 0 324 614
- FR-A- 2 033 144
- US-A- 3 727 118

## Beschreibung

Die Erfindung bezieht sich auf einen Überlastschutz für die Leistungssteuerstufe eines Gleichstrommotors nach dem Oberbegriff des Patentanspruchs 1.

Es ist bekannt, z.B. batteriegespeiste Gleichstrommotoren, die z.B. in Flurförderfahrzeugen eingesetzt werden, über einen impulsgesteuerten Schalter (Leistungssteuerstufe) zu steuern. Der Leistungsschalter erhält vorzugsweise pulsweitenmodulierte Signale, so daß die Energiezufuhr zum Gleichstrommotor stufenlos in Weiten Grenzen gesteuert werden kann. Die Richtungsumkehr des Gleichstrommotors wird mit Hilfe von Richtungsschützen gesteuert, deren Kontakte den jeweiligen Anschluß der Motorklemmen an die Klemmen der Gleichspannungsquelle steuern. Es ist ferner bekannt, parallel zum Anker bzw. der Reihenschaltung von Feldspule und Anker eine Parallelschaltung von zwei Freilaufdioden vorzusehen zum Abbau von Spannungsspitzen bei den Schaltvorgängen.

Eine Schaltungsanordnung der oben beschriebenen Art ist aus der US-A-3 727 118 bekanntgeworden. Zwecks Richtungsumkehr wird wahlweise eine Feldspule über einen Thyristor eingeschaltet. Zur Abschaltung der Thyristoren zur kontaktlosen Richtungsumschaltung sind Kondensatoren vorgesehen.

Aus der FR-A-2 033 144 ist eine Schaltungsanordnung bekanntgeworden, bei der ein Schütz im Versorgungsstromkreis der Feldspule ausgeschaltet wird, wenn die Spannung an einem Punkt einer Parallelschaltung für einen Thyristor zur Spannungsversorgung der Feldspule einen vorgegebenen Wert unterschreitet. Dieser Punkt liegt zwischen einer Diode und einem Kondensator, welcher Punkt gleichzeitig mit einem Steuereingang einer Transistorschaltung verbunden ist, über welche die Spannungsversorgung der Spule des Schützes erfolgt. Während des Normalbetriebes der Feldspule über einen Leistungssteller erfolgt eine ausreichende Aufladung des Kondensators während der Sperrung des Thyristors. Wird der Thyristor aus welchem Gründen immer länger durchgeschaltet als erforderlich, fällt die Spannung am besagten Punkt unter den vorgegebenen Wert und führt zu einer Unterbrechung der Spannungsversorgung der Feldspule.

Falls es in einem Freilaufpfad zu einer Leitungsunterbrechung kommt, besteht die Gefahr, daß an der Leistungssteuerstufe des Gleichstrommotors aufgrund der Motorinduktivität so hohe Spannungen anstehen, daß die Bauelemente des Schalters überlastet werden.

Der Erfindung liegt daher die Aufgabe zugrunde, einen Überlastschutz für die Leistungssteuerstufe eines Gleichstrommotors zu schaffen.

Diese Aufgabe wird gelöst durch die Merkmale des Patentanspruchs 1.

Bei dem erfindungsgemäßen Überlastschutz ist ein Kondensator verhältnismäßig großer Kapazität über eine Diode parallel zum impulsgesteuerten Schalter geschaltet. Dadurch erfolgt eine Entstörung des Schalters bzw. der Endstufe, indem der Kondensator im Augenblick des Sperrvorgangs des Schalters die Energie parasitärer Induktivitäten aufnimmt. Außerdem wird die Spannung des Kondensators überwacht, wofür eine Spannungsmeßvorrichtung vorgesehen ist, die ein Überlastsignal abgibt, wenn die Spannung am Kondensator einen vorgegebenen Wert erreicht. Der vorgegebene Wert muß so bemessen sein, daß die Bauelemente der Leistungssteuerstufe nicht oberhalb ihrer Kenndaten belastet werden. Dies kann, wie erwähnt, etwa dadurch geschehen, daß ein Freilaufpfad unterbrochen ist.

Die Kapazität des Kondensators ist verhältnismäßig hoch auszulegen. Sie ist nach einer Ausgestaltung der Erfindung so bemessen, daß im Fehlerfalle, z.B. bei Unterbrechung eines Freilaufpfades die vorgegebene Überlastspannung erst nach zwei oder mehr Schaltvorgängen des impulsgesteuerten Schalters erreicht wird. Dadurch bleibt der entsprechenden Überwachungsschaltung genügend Zeit die Spannung zu messen und für eine Gegenmaßnahme Sorge zu tragen, z.B. den impulsgesteuerten Schalter auszuschalten. Dabei ist zu berücksichtigen, daß das endgültige Ausschalten des Schalters noch eine weitere Spannungserhöhung verursacht, die noch vom Kondensator aufgenommen werden muß. Daher muß die Ansprechschwelle entsprechend gelegt werden.

Für die Ausgestaltung der Überwachungsschaltung sieht eine Ausgestaltung der Erfindung vor, daß die Steuerimpulse über ein UND-Glied auf den Schalter gegeben werden und der zweite Eingang des UND-Glieds mit dem Ausgang eines Komparators verbunden ist, in dem eine Referenzspannung mit der Spannung am Kondensator verglichen wird. Der impulsgesteuerte Schalter wird mithin nur angesteuert, wenn eine Freigabe vom Komparator her erfolgt. Damit sichergestellt ist, daß auch bei einem einmaligen Erreichen der Überlastspannung eine weitere Ansteuerung des impulsgesteuerten Schalters nicht stattfindet, sieht eine Ausgestaltung der Erfindung vor, daß der Komparator bei detektierter Überspannung das Ausgangssignal hält. Es kann z.B. geschehen, daß in dem Freilaufpfad ein "Wackelkontakt" besteht, so daß die Überspannung wieder verschwindet. Das Halten der detektierten Überspannung zwingt dazu, eine Überprüfung der Motorschaltung vorzunehmen.

Eine weitere Ausgestaltung der Erfindung sieht vor, daß der Kondensator parallel zu den Richtungsschützen geschaltet ist. Wird die sich durch parasitäre Induktivitäten aufbauende Spannung im Kondensator über Widerstände abgebaut, entstehen mithin Energieverluste. Bei der Entladung des Kondensators über die Richtungsschütze wird die Energie zur Versorgung der Schütze ausgenutzt. Es versteht sich, daß eine Speisung der Schütze vom Kondensator aus nur stattfinden kann, wenn die Kondensatorspannung größer ist als die Versorgungsspannung.

Eine weitere Ausgestaltung der Erfindung sieht vor, daß der Kondensator über eine Diode an die Spannungsquelle angeschlossen ist. Auf diese Weise wird ein Verpolungsschutz erhalten, der verhindert, daß der Kondensator mit falscher Polung an die Gleichstromquelle angeschlossen wird.

Die Erfindung wird nachfolgend anhand von Zeichnungen näher erläutert.
- Fig. 1: zeigt eine Schaltungsanordnung eines Gleichstrommotors mit einem Überlastschutz nach der Erfindung.
- Fig. 2: zeigt eine Schaltungsanordnung zur Übermittlung und Verarbeitung einer Überspannung.

Eine Feldspule 10 und ein Anker 12 eines Gleichstrommotors liegen in Reihe an einer Gleichspannungsquelle, beispielsweise einer Batterie mit einer Klemmspannung von 24 Volt. Parallel zur beschriebenen Reihenschaltung sind zwei Freilaufpfade 14, 16 mit Freilaufdioden 18, 20 geschaltet. Eine Richtungsschaltgruppe mit den Kontakten S1, S2, S3 und S4 liegt parallel zur Feldspule 10 und wird betätigt von zwei parallel geschalteten Richtungsschützen 22, 24, die über eine Diode 26 mit der Gleichspannungsquelle angeschlossen sind. Die Einschaltung der Schütze 22, 24 erfolgt über Steuerkontakte S5, S6 und S7.

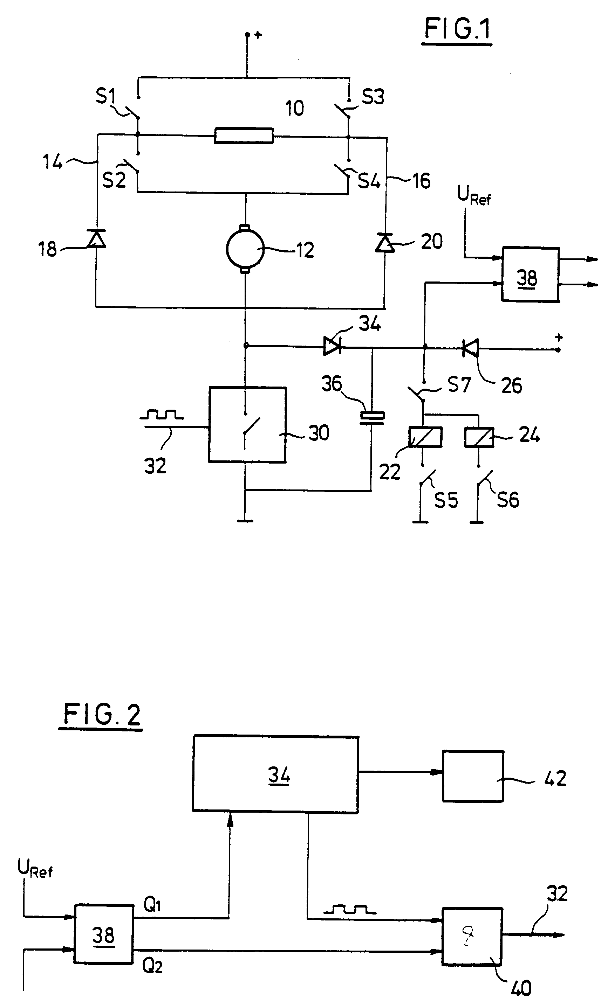

In die Reihenschaltung von Feldspule 10 und Anker 12 ist außerdem ein impulsgesteuerter Schalter oder PWM-Steller 30 geschaltet (PWM bedeutet Pulsweitenmodulation). Die Steuerimpulse kommen über eine Steuerleitung 32 von einer Zentralsteuereinheit 34 (Fig. 2).

Parallel zum PWM-Steller 30 ist eine Reihenschaltung aus einer Diode 34 und einem Kondensator relativ hoher Kapazität geschaltet. Der Kondensator ist z.B. für 100 Volt ausgelegt und besitzt eine Kapazität von 1000 F. Mit einem Pol des Kondensators 36 ist ein Komparator 38 verbunden, in dessen anderen Eingang eine Referenzspannung U_{Ref} gegeben wird.

Wie erkennbar, werden durch parasitäre Induktivitäten im PWM-Steller auftretende Spannungen auf den Kondensator 36 entladen, der seinerseits seine Spannung über eines der eingeschalteten Schütze 22 oder 24 entlädt, allerdings nur, wenn die Spannung am Kondensator 36 höher ist als die Versorgungsspannung von 24 Volt. Damit wird die aufgrund der parasitären Induktivitäten verbrauchte Energie durch Versorgung der Schütze 22, 24 wiedergewonnen und braucht nicht durch Widerstandserwärmung vernichtet zu werden. Die Diode 26 sorgt dafür, daß der Kondensator in richtiger Polung an die Gleichspannungsquelle angeschlossen wird.

Außerdem gibt der Komparator 38 ein Signal Q2 ab, das auf ein UND-Glied 40 gegeben wird. Q2 ist z.B. eine logische Null, wenn die am Kondensator gemessene Spannung größer als die Referenzspannung U_{Ref} ist und eine logische Eins, wenn die Referenzspannung nicht erreicht wird. Auf den anderen Eingang des UND-Glieds 40 ist der Steuereingang der zentralen Steuereinheit 34 für den PWM-Steller 30 geschaltet, so daß der PWM-Steller angesteuert wird, wenn eine Überspannung nicht detektiert wird. Bei einer Überspannung liegt am UND-Glied 40 eine logische Null, so daß der PWM-Steller keine Steuersignale erhält und somit der Gleichstrommotor ausgeschaltet bleibt.

Außerdem kann ein weiterer Ausgang Q1 vom Komparator 38 auf die zentrale Steuereinheit gegeben werden, die ein Display 42 ansteuert, wenn der Komparator eine Überspannung detektiert. So kann z.B. der Ausgang Q1 eine logische Eins sein, wenn eine Überspannung detektiert wird und eine logische Null, wenn die Spannung am Kondensator unterhalb des Referenzwertes liegt.

Der Komparator hält den detektierten Überspannungswert, indem Q2 weiterhin eine logische Eins ist, auch wenn die Spannung am Kondensator 36 wieder kleiner wird. Dadurch ist sichergestellt, daß in jedem Fall eine Überprüfung der Motorschaltung vorgenommen wird, ob z.B. Unterbrechungen vorliegen. Im Falle einer nur vorübergehenden Unterbrechung (Wackelkontakt) würde sonst unter Umständen eine Anzeige nicht erfolgen, gleichwohl eine Gefährdung der Bauelemente des PWM-Stellers 30 gegeben sein.

Die Leitung zur Diode 34 und zum Kondensator 36 sollte so kurz wie möglich sein, z.B. höchstens 10 cm, um die parasitären Induktivitäten so klein wie möglich zu halten.

## Patentansprüche

1. Überlastschutz für die Leistungssteuerstufe eines Gleichstrommotors, dessen Feldspule (10) über einen impulsgesteuerten Schalter (30) und zwei Freilaufdioden (18, 20), von denen durch eine von Richtungsschnitzen (22, 24) gesteuerte Kontaktanordnung (51-54) entweder die eine der Reihenschaltung aus Feldspule und dem Anker (12) des Gleichstrommotors und die andere nur dem Anker (12) parallelgeschaltet ist oder umgekehrt, an eine Gleichspannungsquelle angeschlossen ist, dadurch gekennzeichnet, daß ein Kondensator (36) verhältnismäßig großer Kapazität über eine Diode (34) parallel zum Schalter (30) so geschaltet ist, daß er bei Unterbrechung im Pfad der Freilaufdioden (18, 20) von entsprechenden Spannungen durch die Schaltvorgänge in den Motorinduktivitäten nach und nach aufgeladen wird und an einem Verbindungspunkt zwischen Diode (34) und Kondensator (36) eine Spannungsmeßvorrichtung (38) angeschlossen ist, die zwecks Öffnung des Schalters (30) ein Überlastsignal abgibt, wenn die Spannung am Kondensator (36) einen vorgegebenen oberen Wert erreicht.

2. Überlastschutz nach Anspruch 1, dadurch gekennzeichnet, daß die Kapazität des Kondensators (36) so bemessen ist, daß im Fehlerfalle die vorgegebene Überlastspannung erst nach zwei oder mehr Schaltvorgängen des impulsgesteuerten Schalters (30) erreicht wird.

3. Überlastschutz nach Anspruch 1 oder 2, dadurch gekennzeichnet, daß die Steuerimpulse über ein UND-Glied (40) auf den Schalter (30) gegeben werden und der zweite Eingang des UND-Glieds (40) mit dem Ausgang eines Komparators (38) verbunden ist, der eine Referenzspannung U_{Ref} mit der Spannung am Kondensator (36) vergleicht.

4. Überlastschutz nach Anspruch 3, dadurch gekennzeichnet, daß der Komparator (38) bei detektierter Überspannung das Ausgangssignal hält.

5. Überlastschutz nach Anspruch 3 oder 4, dadurch gekennzeichnet, daß ein Ausgang des Komparators (38) an eine zentrale Steuerschaltung (34) angeschlossen ist, mit der eine Anzeige (42) für eine Überspannung verbunden ist.

6. Überlastschutz nach einem der Ansprüche 1 bis 5, dadurch gekennzeichnet, daß der Kondensator (36) parallel zu den Richtungsschützen (22, 24) geschaltet ist.

7. Überlastschutz nach Anspruch 6, dadurch gekennzeichnet, daß der Kondensator (36) über eine Diode (26) an die Spannungsquelle angeschlossen ist.

## Claims

1. An overload protection for the power control stage of a DC motor including a field coil (10) which is connected through a pulse control switch (30) and a pair of free-wheel diodes (18,20) to a DC voltage source, wherein either the one of said pair of free-wheel diodes is connected in parallel to the series connection of the field coil and the armature (12) of the DC motor by a contact arrangement (S1 to S4) controlled by directional relays (22,24) or the other is connected in parallel to the armature (12) only, or vice versa, characterized in that a capacitor (36) of a relatively high capacity is connected through a diode (34) in parallel to the switch (30) so that it will be charged little by little by respective voltages due to the switching operations in the motor inductivities when an interruption in the path of the free-wheel diodes (18,20) occurs, and that a voltage measuring means (38) is connected to a connecting terminal between the diode (34) and the capacitor (36) which voltage measuring means delivers an overload signal for opening the switch (30) when the voltage across the capacitor (36) reaches a predetermined upper value.

2. The overload protection of claim 1, characterized in that the capacity of the capacitor (36) is selected such that in case of failure the predetermined overload voltage will be reached only after two or more switching operations of the pulse control switch (30).

3. The overload protection of claim 1 or 2, characterized in that the control pulses are delivered through an AND gate (40) to the switch (30) and that the second input of the AND gate (40) is connected to the output of a comparator (38) comparing a reference voltage U_{Ref} and the voltage across the capacitor (36).

4. The overload protection of claim 3, characterized in that the comparator (38) keeps the output signal when an overvoltage is detected.

5. The overload protection of claim 3 or 4, characterized in that an output of the comparator (38) is connected to a central control unit (34) which is connected to a display (42) for displaying an overvoltage.

6. The overload protection of one of claims 1 to 5, characterized in that the capacitor (36) is connected in parallel to the directional relays (22,24).

7. The overload protection of claim 5 or claim 6, characterized in that the capacitor (36) is connected through a diode (26) to the voltage source.

## Revendications

1. Dispositif de protection contre une surcharge pour l'étage de commande de puissance d'un moteur à courant continu dont la bobine de champ (10) est raccordée à une source de tension continue par l'intermédiaire d'un interrupteur (30) commandé de façon impulsionnelle et de deux diodes à effet unidirectionnel (18,20), dont l'une est branchée en parallèle avec le circuit série formé de la bobine de champ et de l'induit (12) du moteur à courant continu et dont l'autre est branchée en parallèle uniquement avec l'induit (12) ou inversement, par l'intermédiaire d'un dispositif de contacts (S1 - S4) commandé par des contacteurs directionnels (22, 24), caractérisé en ce qu'un condensateur (36) possédant une capacité comparativement élevée est branché, par l'intermédiaire d'une diode (34), en parallèle avec l'interrupteur (30) de telle sorte que, dans le cas d'une interruption dans la voie des diodes à effet unidirectionnel (18,20),le condensateur est chargé de plus en plus par des tensions correspondantes, sous l'effet des processus de commutation dans les inductances du moteur, et en ce qu'à un point de jonction entre la diode (34) et le condensateur (36) est raccordé un dispositif de mesure de tension (38), qui, pour ouvrir l'interrupteur (30), envoie un signal de surcharge lorsque la tension aux bornes du condensateur (36) atteint une valeur supérieure prédéterminée.

2. Dispositif de protection contre une surcharge selon la revendication 1, caractérisé en ce que la capacité du condensateur (36) est déterminée de telle sorte que dans le cas d'un défaut, la tension prédéterminée de surcharge n'est atteinte qu'au bout de deux ou d'un plus grand nombre de processus de commutation de l'interrupteur (30) commandé de façon impulsionnelle.

3. Circuit de protection contre une surcharge selon la revendication 1 ou 2, caractérisé en ce que les impulsions de commande sont appliquées à l'interrupteur (30) par l'intermédiaire d'un circuit ET (40) et que la seconde entrée du circuit ET (40) est reliée à la sortie d'un comparateur (38), qui compare une tension de référence U_{Ref} à la tension aux bornes du condensateur (36).

4. Dispositif de protection contre une surcharge selon la revendication 3, caractérisé en ce que le comparateur (38) maintient le signal de sortie, dans le cas où une surtension est détectée.

5. Dispositif de protection contre une surcharge selon la revendication 3 ou 4, caractérisé en ce qu'une sortie du comparateur (38) est raccordée à un circuit central de commande (34), auquel est relié un dispositif d'affichage (42) pour une surtension.

6. Dispositif de protection contre une surcharge selon l'une des revendications 1 à 5, caractérisé en ce que le condensateur (36) est branché en parallèle avec les contacteurs directionnels (22,24).

7. Dispositif de protection contre une surcharge selon la revendication 6, caractérisé en ce que le condensateur (36) est raccordé à la source de tension par l'intermédiaire d'une diode (26).
